Europäisches Patentamt

European Patent Office

Office européen des brevets

(11) Veröffentlichungsnummer: **0 269 035 B1**

(19)

(12) **EUROPÄISCHE PATENTSCHRIFT**

(45) Veröffentlichungstag der Patentschrift: **28.07.93**

(51) Int. Cl.5: **C08G 18/62**, C09D 175/04, C09D 5/34

(21) Anmeldenummer: **87117182.3**

(22) Anmeldetag: **21.11.87**

(54) **Überzugsmittel und dessen Verwendung als Grundierung und Füller.**

(30) Priorität: **25.11.86 DE 3640243**

(43) Veröffentlichungstag der Anmeldung:
**01.06.88 Patentblatt 88/22**

(45) Bekanntmachung des Hinweises auf die Patenterteilung:
**28.07.93 Patentblatt 93/30**

(84) Benannte Vertragsstaaten:
**AT BE CH DE ES FR GB IT LI NL SE**

(56) Entgegenhaltungen:
**EP-A- 0 197 460**
**EP-A- 0 219 131**
**DE-A- 3 545 891**
**FR-A- 2 295 048**
**US-A- 3 933 760**

(73) Patentinhaber: **Herberts Gesellschaft mit beschränkter Haftung**
**Christbusch 25**
**W-5600 Wuppertal 2(DE)**

(72) Erfinder: **Becker, Heinz Dietholf**
**Ulrich Haberland-Strasse 28**
**W-5300 Bonn 1(DE)**
Erfinder: **Bederke, Klaus, Dr.**
**Oststrasse 36**
**W-4322 Sprockhövel 2(DE)**
Erfinder: **Dahm, Ralf**
**Wenschebach 8**
**W-5632 Wermelskirchen(DE)**
Erfinder: **Kerber, Hermann**
**Daniel Schürmann-Weg 37**
**W-5600 Wuppertal 21(DE)**
Erfinder: **Sadowski, Fritz, Dr.**
**Am Mühlenacker 35**
**W-5024 Brauweiler bei Köln(DE)**
Erfinder: **Stephan, Werner**
**Jägerhofstrasse 25**
**W-5600 Wuppertal 1(DE)**

(74) Vertreter: **Türk, Gille, Hrabal, Leifert**
**Brucknerstrasse 20**
**W-4000 Düsseldorf 13 (DE)**

EP 0 269 035 B1

## Beschreibung

Die Erfindung betrifft ein Überzugsmittel, das ein Bindemittelgemisch aus einer esterlöslichen Nitrocellulose, einem hydroxyfunktionellen Copolymerisat und einem Lackpolyisocyanat, gegebenenfalls neben Pigmenten und/oder Füllstoffen, Lösungsmitteln und lacküblichen Hilfsstoffen enthält. Das erfindungsgemäße Überzugsmittel ist besonders geeignet zur Herstellung von Grundierungen sowie als Füller, insbesondere auf dem Kraftfahrzeugsektor, da es mit dem erfindungsgemäßen Überzugsmittel möglich ist, Schichtdicken bis zu 500 $\mu$m zu erzielen.

Überzugsmittel auf der Basis von Polyhydroxylpolyacrylatharzen und Lackpolyisocyanaten sind bekannt. Beispielsweise wird in der DE-A-24 60 329 ein Überzugsmittel beschrieben, das für die Automobildecklackierung geeignet ist und ein Bindemittel auf der Basis eines Acrylharzes enthält, das copolymerisierte Einheiten von 10 bis 50 Gewichtsteilen eines Hydroxyalkylesters der (Meth)acrylsäure, 0 bis 80 Gewichtsteile Styrol oder Styrolderivate, 10 bis 90 Gewichtsteile eines (Meth)acrylsäureesters mit bis zu 12 C-Atomen im Alkoholrest und 0 bis 50 Gewichtsteile einer $\alpha,\beta$-monoolefinisch ungesättigten Mono- oder Dicarbonsäure aufweist. Derartige Acrylharze werden zusammen mit Lackpolyisocyanaten und Cellulosederivaten als Verlaufsmittel eingesetzt. Es hat sich jedoch gezeigt, daß solche Überzugsmittel tatsächlich, wie in der DE-A-24 60 329 angegeben, nur zur Decklackierung verwendet werden können, da sie zur Ausbildung dickerer Schichten nicht geeignet sind. So ist es beispielsweise mit dem vorstehend beschriebenen bekannten Überzugsmittel nicht möglich, Schichtdicken über 150 $\mu$m durch Strahler zu trocknen, da eine Blasenbildung auftritt und die erhaltenen Überzüge somit nicht "kocherfrei" sind.

In der EP-A-0 197 460 werden acrylische Polyole beschrieben, die aus einem Comonomergemisch hergestellt werden, das ein hydroxyfunktionelles Acrylatmonomer und Styrol enthält. Aus den Polyolen können Polyurethanüberzüge hergestellt werden.

An Grundierungsmittel bzw. Grundierfüller oder Füller werden verschiedene Anforderungen gestellt. Sie sollten problemlos in der Applikation sein, z.B. sollte eine Verarbeitung mit unterschiedlichen Viskositäten auch an senkrechten Flächen zu gutem Verlauf führen. Ferner muß eine gute An- und Durchtrocknung sowie Schleifbarkeit (trochen und im Naßzustand) gegeben sein. Außerdem sollte eine derartige Lösungsmittelfestigkeit vorliegen, daß beim Überspritzen mit Zweikomponenten-Decklacken ein guter Lackstand gewährleistet wird. Bei Füllern sollte die Möglichkeit bestehen, hohe Schichtdicke, bis zu 300 $\mu$m bzw. sogar 500 $\mu$m zu erzielen, ohne daß sich Trocknungsprobleme durch Kocherneigung ergeben.

Aufgabe der Erfindung war daher die Bereitstellung von Überzugsmitteln, die den vorstehenden Anforderungen genügen, die zur Herstellung von Grundierungen und als Füller geeignet sind und die insbesondere bei hohen Schichtdicken eine sichere und kurze Luft-, Ofen- und Strahlungstrocknung ermöglichen.

Diese Aufgabe wird durch die anspruchsgemäßen Überzugsmittel, die den Gegenstand der Erfindung bilden, gelöst.

Es hat sich gezeigt, daß die erfindungsgemäßen Überzugsmittel in hohen Schichtdicken bevorzugt bis zu 300, 400 oder 500 $\mu$m aufgetragen werden können und dennoch bei Strahlertrocknung keine Kocherneigung zeigen. Es wird somit möglich, ein festkörperreiches Überzugsmittel ("High-Solid-Produkt") bereitzustellen, das leicht trocknet und aufgrund des niedrigen Lösungsmittelgehalts umweltfreundlich ist. Die erhaltenen Überzugsschichten haften gut auf verschiedenen Substraten, beispielsweise gereinigten, entfetteten und angeschliffenen Eisenblechen, intakten, angeschliffenen Altlackierungen, Ersatzteil-Grundierungen und Spachtelstellen. Sie sind gut naß schleifbar.

Die Herstellung des in den erfindungsgemäßen Überzugsmitteln in einer Menge von mindestens 60 Gew.% eingesetzten Copolymerisats (Komponnete A) kann durch Polymerisation nach üblichen Verfahren, z.B. der Substanz-, Lösungs- oder Perlpolymerisation durchgeführt werden. Die verschiedenen Polymerisationsverfahren sind gut bekannt und beschrieben in: Houben-Weyl, Methoden der Organischen Chemie, 4. Aufl., Band 14/1, Seiten 24-255 (1961).

Das Lösungspolymerisationsverfahren wird für die Herstellung des Copolymerisats bevorzugt. Bei diesem Verfahren wird das Lösungsmittel in das Reaktionsgefäß vorgelegt, auf Siedetemperatur geheizt und das Monomeren/Initiatorgemisch kontinuierlich in einer bestimmten Zeit zudosiert.

Die Polyermisation wird bei Temperaturen zwischen 60°C und 160°C, vorzugsweise bei 80°C bis 140°C durchgeführt.

Die Polymerisationsreaktion wird mit bekannten Polymerisationsinitiatoren gestartet. Geeignete Initiatoren sind Per- und Azo-Verbindungen, die in einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind:

Dialkylperoxide, wie Di-tert.-Butylperoxid, Di-cumylperoxid.

Diacylperoxide, wie Di-benzoylperoxid, Di-lauroylperoxid.

Hydroperoxide, wie Cumolhydroperoxid, tert.-Butylhydroperoxid.

Perester, wie tert.-Butyl-perbenzoat, tert.-Butyl-perpivalat, tert.-Butyl-per-3,5,5-trimethylhexanoat, tert.-Butyl-per-2-ethylhexanoat.

Peroxidicarbonate, wie Di-2-ethylhexyl-peroxydicarbonat, Dicyclohexylperoxydicarbonat.

Perketale, wie 1,1-Bis-(tert.-Butylperoxy)3,5,5-trimethylcyclohexan, 1,1-Bis(tert.-Butylperoxy)cyclohexan.

Ketonperoxide, wie Cyclohexanonperoxid, Methylisobutylketonperoxid.

Azo-Verbindungen, wie 2,2'-Azo-bis(2,4-dimethylvaleronitril), 2,2'-Azo-bis(2-methylbutyronitril), 1,1'-Azo-bis-cyclohexancarbonitril, Azo-bis-isobutyronitril.

Die Polymerisationsinitiatoren, insbesondere Perester werden im allgemeinen in einer Menge von 0,1 bis 3 Gew.-%, bezogen auf die Monomeren-Einwaage, zugesetzt.

Als Lösungsmittel, die zur Lösungspolymerisation eingesetzt werden können, eignen sich z.B. solche organische Lösungsmittel, die dann später auch in den fertigen Überzugsmitteln eingesetzt werden. Beispiele für solche Lösungsmittel sind:

Glykolether, wie Ethylenglykoldimethylether,

Glykoletherester, wie Ethylglykolacetat, Butylglykolacetat, 3-Methoxy-n-butylacetat, Butyldiglykolacetat, Methoxypropylacetat

Ester, wie Butylacetat, Isobutylacetat, Amylacetat

Ketone, wie Methylethylketon, Methylisobutylketon, Diisobutylketon, Cyclohexanon, Isophoron

Es können auch aromatische Kohlenwasserstoffe, wie Xylol, Solvesso 100 (eingetragenes Warenzeichen) und aliphatische Kohlenwasserstoffe, gegebenenfalls im Verschnitt mit den oben genannten Lösungsmitteln, eingesetzt werden.

Bei der Herstellung des Copolymerisats können zur Regelung des Molekulargewichts Kettenüberträger mitverwendet werden. Beispiele sind Mercaptane, Thioglykolsäureester, Chlorkohlenwasserstoffe.

Die Polymerisationsbedingungen (Reaktionstemperatur, Zulaufzeit der Monomerenmischung, Lösungskonzentration werden so eingerichtet, daß die hergestellten Copolymerisate ein zahlenmittleres Molekulargewicht (bestimmt durch Gelpermeationschromatographie beispielsweise unter Verwendung von THE als Lösungsmittel und von Polystyrol als Eichsubstanz) zwischen 2000 und 20000 aufweisen.

Die erfindungsgemäß hergestellten Copolymerisate liegen in einem Glasüber-gangstemperaturbereich von $+20°C$ bis $+80°C$, berechnet aus der in der Literatur angegebenen Glasübergangstemperatur der Homopolymerisate der einzelnen Monomeren (FOX-Gleichung; s. z.B. Polymere Werkstoffe; Batzer 1985, Seite 307).

Zur Verbesserung der Pigmentbenetzbarkeit der erfindungsgemäß hergestellten Copolymerisate werden Dicarbonsäureanhydride A)d) durch Veresterung mit den in der Polymerkette enthaltenen Hydroxylgruppen eingebaut. Beispiele für derartige Dicarbonsäureanhydride sind Tetrahydrophthalsäureanhydrid, Hexahydrophthalsäureanhydrid, Phthalsäureanhydrid und Bernsteinsäureanhydrid. Sie werden in einer Menge von 2 bis 6 Gew.-%, bezogen auf die Monomer-Einwaage verwendet. Bevorzugt wird Phthalsäureanhydrid Monomeren-Einwaage eingesetzt.

Bei der Herstellung der in den erfindungsgemäßen Überzugsmitteln enthaltenen, Copolymerisate werden als Komponente A)a) Styrol und/oder Styrolderivate in einer Menge von 36-44 Gew.% verwendet. Styrolderivate sind bevorzugt alkyliertes Styrol, mit einem, zwei oder drei Alkylestern (bevorzugt mit 1 bis 4 C-Atomen) in $\alpha$-Stellung oder im Kern. Beispiele sind $\alpha$-Methylstyrol, o,m- oder p-Methylstyrol und p-tert.-Butylstyrol. Sie können im Gemisch miteinander und gegebenenfalls mit Styrol eingesetzt werden. Styrol ist bevorzugt.

Die als Komponente A)b) in einer Menge von 22-28 Gew% eingesetzen Hydroxyalkylester der Acrylsäure oder Methacrylsäure weisen bevorzugt 4 bis 6 C-Atome im Hydroxyalkylrest auf. Beispiele für bevorzugte Hydroxy-alkylester der Acrylsäure oder Methacrylsäure sind: Butandiol-1.4-monoacrylat, Butandiol-1.4-monomethacrylat, Butandiol-1.2-monoacrylat, Butandiol-1.2-monomethacrylat, Hexandiol-1.6-monoacrylat, Hexandiol-1.6-monomethacrylat, wobei Butandiol-1.4-monoacrylat und Butandiol-1.4-monomethacrylat besonders bevorzugt sind.

Die in einer Menge von 26-30 Gew.% verwendeten (Meth)acrylate (Komponente A)c)) sind Alkylester der Acrylsäure oder Methacrylsäure mit einer Glasübergangstemperatur der Homopolymerisate von > $40°C$. Geeignete Beispiele sind tert.-Butylacrylat, Methylmethacrylat, Ethylmethacrylat, Isopropylmethacrylat, tert.-Butylmethacrylat, Cyclohexylmethacrylat, Trimethylcyclohexylmethacrylat. Bevorzugt sind tert.-Butylacrylat und Methylmethacrylat.

Die Summe der Komponenten A)a) + A)b) + Ac) + Ad) beträgt 100 %.

Die in dem erfindungegemäßen Überzugsmittel als Komponente B) in einer Menge von 1-5 Gew% verwendete Nitrocellulose (Cellulosenitrat) soll in organischen Ester-Lösungsmitteln löslich sein. Hierzu ist beispielsweise Nitrocellulose mit einem Stickstoffgehalt von 11,8 % 12,25 % geeignet. Eine solche Nitrocellulose ist in Estern löslich; in Alkoholen praktisch unlöslich. Es besteht jedoch weitgehend Verschnittfähigkeit mit Alkoholen und Aromaten. Ester-Lösungsmittel in denen die erfindungsgemäß einsetzbare Nitrocellulose löslich ist, sind z.B. solche Ester, wie sie vorstehend als geeignet für die Lösungspolymerisation bei der Herstellung der Komponente A) verwendet werden können, und wie sie auch später in den fertigen Überzugsmitteln enthalten sind.

Es ist günstig, wenn die Eigenviskosität der Nitrocellulose ausgedrückt durch den K-Wert nach H. Fikentscher (Cellulosechemie 13, Seite 58 (1932)) im Bereich von 300 bis 600 (Messung: 2 Gramm Nitrocellulose in 100 ml Aceton bei 25 °C), liegt.

Bevorzugt eingesetzt wird Nitrocellulose mit einen K-Wert von 400, z.B. Collodiumwolle ® E 400 B (Wolff Walsrode AG).

Für die Vernetzung der erfindungsgemäßen Bindemittelmischung aus Copolymerisat und esterlöslicher Nitrocellulose werden Polyisocyanate (Komponente C) eingesetzt. Es handelt sich hierbei um lacktypische Polyisocyanate bzw. Lackpolyisocyanate, wie sie in der Literatur, beispielsweise der EP-B1-00 68 383 (dort insbesondere Seite 2, Zeile 57 bis Seite 3, Zeile 26) beschrieben werden.

Der Anteil an Polyisocyanat-Vernetzer C) wird so gewählt, daß auf eine Hydroxyl-Gruppe der Bindemittelmischung 0.5 bis 2 Isocyanat-Gruppen entfallen. Überschüssige Isocyanat-Gruppen können durch Feuchtigkeit abreagieren und zur Vernetzung beitragen. Die Menge an C) beträgt 25-35 Gew.%.

Die Summe der Komponenten A) + B) + C) beträgt 100 %.

Im Folgenden sind einige Beispiele für geeignete Polyisocyanate aufgeführt: aliphatische, cycloaliphatische und aromatische Polyisocyanate wie, Hexamethylendiisocyanat, Trimethylhexamethylendiisocyanat, Isophorondiisocyanat, 4,4'-Diisocyanato-dicyclohexylmethan, Toluylen-2,4-Diisocyanat, o-,m- und p-Xylylendiisocyanat, 4,4'-Diisocyanatodiphenylmethan; mit CH-, NH- oder OH-aciden Verbindungen verkappte Polyisocyanate; Biuret-, Allophanat-, Urethan-, oder Isocyanurat-Gruppen enthaltende Polyisocyanate. Beispiele für derartige Polyisocyanate sind ein Biuretgruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N® Bayer AG); ein Isocyanuratgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390® Bayer AG); oder Urethangruppen enthaltende Polyisocyanate, welche Reaktionsprodukte darstellen aus 3 Molen Toluylendiisocyanat und 1 Mol Trimethylolpropan mit einem NCO-Gehalt von etwa 17,5 % (entsprechend dem Handelsprodukt Desmodur L® Bayer AG).

Bevorzugt eingesetzt werden Desmodur N® und Desmodur N 3390®.

Zur Herstellung der erfindungsgemäßen Überzugsmittel werden die Einzelbestandteile miteinander vermischt und in üblicher Weise homogenisiert bzw. vermahlen. Beispielsweise kann so vorgegangen werden, daß zunächst das hydroxyfunktionelle Copolymerisat (Komponente A) mit gegebenenfalls vorhandenen Pigmenten und/oder Füllstoffen sowie gegebenenfalls vorhandenen lacküblichen Hilfsstoffen und Lösungsmittel vermischt werden, eine Dispersion gebildet wird und anschließend die Nitrocellulose (Komponente B) in Form einer Lösung zugesetzt wird, worauf sich ein Mahlgang anschließt. Dann kann die Zugabe des Polyisocyanats (Komponente C) erfolgen. Es ist auch möglich das Polyisocyanat (Komponente C) getrennt in Form einer Lösung zu lagern und erst unmittelbar vor dem Gebrauch des Überzugsmittels zu den übrigen vorgemischten Bestandteilen zu fügen.

Als Lösungsmittel für die erfindungsgemäßen Überzugsmittel eignen sich beispielsweise die vorstehend für die Lösungspolymerisation zur Herstellung des hydroxyfunktionellen Copolymerisats (Komponente A) beschriebenen Lösungsmittel. Die Menge des verwendeten Lösungsmittels hängt von der gewünschten Viskosität des fertiggestellten Überzugsmittels ab.

Den erfindungsgemäßen Überzugsmitteln können gegebenenfalls übliche Pigmente zugesetzt werden. Es können übliche anorganische und/oder organische Pigmente eingesetzt werden. Diese Pigmente können als Farbpigmente oder auch als Korrosionsschutzpigmente dienen. Beispiele für verwendbare Farbpigmente sind Eisenoxid schwarz, Eisenoxid gelb und Titandioxid. Ein Beispiel für ein Korrosionsschutzpigment ist Zinkphosphat.

Die erfindungsgemäßen Überzugsmittel können auch Füllstoffe enthalten. Es handelt sich hierbei um übliche Füllstoffe, wie sie für Überzugsmittel verwendet werden und die sich beispielsweise auf das Haftvermögen, die Elastizität, die Trocknung, die Schleifbarkeit und die Filmhärte von aus den Überzugsmitteln hergestellten Überzügen auswirken.

4

Beispiele für derartige Füllstoffe sind Kieselsäure bzw. Siliziumdioxid (beispielsweise zur Verbesserung der Adhäsion, der Filmhärte, der Lösungsmittelabgabe und zur Beeinflussung der Schleifbarkeit), Aluminiumsilikat (beispielsweise zur Verbesserung der Schleifbarkeit), Magnesiumsilikat (beispielsweise zur Erhöhung der Haftfestigkeit) und Bariumsulfat (beispielsweise zur Verbesserung der Filmhärte).

Das Verhältnis Feststoffe und/oder Pigmente zu Bindemittel (fest auf fest; Gewichtsanteile) beträgt bevorzugt 70 bis 80 zu 30 bis 20. Den erfindungsgemäßen Überzugsmitteln können auch übliche Hilfsstoffe zugesetzt werden, wie sie in der Lacktechnik verwendet werden. Beispiele hierfür sind Tixotropiermittel, wie Montmorillonit oder pyrogenes Siliziumdioxid. Weitere Beispiele sind organische Metallsalze, wie Dibutylzinndilaurat und Zinknaphthenat. Derartige Katalysatoren fördern die Durchtrocknung, was zu einer rascheren Schleifbarkeit der erhaltenen Überzüge führt. Weitere Beispiele für lackübliche Hilfsstoffe sind Netzmittel, wie ionische und nicht-ionische Netzmittel, Korrosionsschutzmittel usw.

Die erfindungsgemäßen Überzugsmittel sind zur Ausbildung von Überzügen auf verschiedensten Substraten geeignet. Derartige Substrate sind beispielsweise Metall, Holz, Keramik und Kunststoff. Sie eignen sich insbesondere in der Kraftfahrzeugindustrie sowie in anderen Industriebereichen für Überzugszwecke in Serie, sowie im Reparaturbereich. Sie sind besonders geeignet für die Reparatur von Lackschäden an Kraftfahrzeugen, insbesondere Personenkraftwagen.

Sie können auf das Substrat als solches oder auf übliche Grundierungen aufgebracht werden. Sie sind besonders geeignet als Füller, insbesondere Grundierfüller, da sie die Bildung hoher Schichtdicken von bis zu 300, 400 oder sogar 500 $\mu$m ermöglichen. Im Handel werden sie insbesondere als 2-Komponenten-Materialien eingesetzt; d.h. die Lösung der Komponente C wird der Dispersion der Komponenten A und B mit gegebenenfalls Zusätzen, bevorzugt unmittelbar vor dem Gebrauch zugemischt.

Die erfindungsgemäßen Überzugsmittel können auf verschiedene Weise aufgetragen werden, z.B. durch Spritzen (wie Druckluftspritzen), Pinsel- und Spachtelauftrag.

Aus den erfindungsgemäßen Überzugsmitteln hergestellte Überzüge sind leicht trocknend und härten auch in dicken Schichten zuverlässig durch. Sie sind beispielsweise für die Härtung durch Infrarotstrahlung geeignet, wobei keine Blasenbildung (Kocherneigung) auftritt.

Durch die vorliegende Erfindung wird somit ein Überzugsmittel bereitgestellt, das einen hohen Festkörpergehalt bzw. einen relativ niedrigen Lösungsmittelgehalt aufweisen kann. Es ist daher besonders umweltfreundlich. Aufgrund der geringen Kocherneigung ist es auch in dicken Schichten leicht trocknend und durchhärtbar. Es haftet auf den verschiedensten Untergründen und ist daher besonders gut im Kraftfahrzeugreparaturbereich einsetzbar (beispielsweise können Spachtelflecken aus Polyethylen abgedeckt und nach dem Trocknen und Schleifen mit üblichen Decklacken überlackiert werden). Die erfindungsgemäßen Überzugsmittel sind extrem stark füllend und naß schleifbar.

Beispiele 1 und 2 und Vergleichsversuch (Herstellung der Komponente A)

In einen 4l-Dreihals-Schliffkolben, der mit einem Rührwerk, Kontaktthermometer, Kugelkühler und Tropftrichter ausgerüstet ist, wird Pos. I (Mengenangaben sind der Tabelle 1 zu entnehmen) vorgelegt und unter Rühren bei eingeschalteter Rückflußkühlung auf 124°C geheizt.

Innerhalb von 5 Stunden wird Pos. II (Monomerengemisch + Initiator) kontinuierlich aus dem Tropftrichter heraus zudosiert. Die Temperatur steigt gegen Ende der Zulaufzeit auf 126°C an. Nach Zulaufende wird der Tropftrichter mit Pos. III nachgespült und zum Reaktionsgemisch hinzugefügt.

Anschließend wird auf 110°C abgekühlt, Pos. IV zugesetzt und wieder auf Rückflußtemperatur geheizt. Der Ansatz wird 5 Stunden bei 124-126°C nachpolymerisiert, so daß die Umsetzung > 99 % ist.

Dann wird das Polymerisat auf 60 °C abgekühlt und mit Pos. V verdünnt.

T A B E L L E  1:
==================

(Einwaage in Gramm)

| Posi-tion: | Bestandteil: | Beispiele: | | Vgl.: |
|---|---|---|---|---|
| | | 1 | 2 | |
| I | Butylacetat | 300 | 720 | – |
| | Xylol | 420 | – | 360 |
| II | Styrol | 440 | 440 | 186 |
| | Methylmethacrylat | – | 278 | 212 |
| | tert.-Butylacrylat | 320 | – | – |
| | Butandiol-1,4-monoacrylat | 268 | – | – |
| | Butandiol-1,4-monomethacrylat | – | 294 | – |
| | Butylmethacrylat | – | – | 108 |
| | 2-Ethylhexylacrylat | – | – | 108 |
| | β-Hydroxypropylmethacrylat | – | – | 412 |
| | tert.-Butylperoxyethylhexanoat | – | 20 | – |
| | tert.-Butylperoxybenzoat | 26 | 20 | 30 |
| III | Butylacetat | – | 80 | – |
| | Xylol | 80 | – | 80 |
| IV | Phthalsäureanhydrid | 46 | 48 | 48 |
| V | Butylacetat | – | 100 | 280 |
| | Xylol | 100 | – | 176 |
| Σ | | 2000 ==== | 2000 ==== | 2000 ==== |
| Kennzahlen: | | | | |
| | Festkörper (%): | 54,8 | 55,0 | 55,1 |
| | Viskosität (mPa.s b.25°C): | 640 | 1030 | 1890 |
| | Säurezahl (bez.a.Festharz): | 18,1 | 18,8 | 18,1 |
| | OH-Zahl (bez.a.Festharz): | 80 | 80 | 130 |

Beispiel 3

Im Folgenden wird ein Beispiel für ein erfindungsgemäßes Überzugsmittel beschrieben, das als 2-Komponenten-Mehrbereichsfüller geeignet ist:

Rezeptur (Gewichtsteile)

21,00 hydroxyfunktionelles Copolymerisat (Komponente A) nach Beispiel 1, 55 %, gelöst in Xylol/Butylacetat (98/100)
6,50 Methoxybutylacetat (Siedebreich 160-170 °C)
5,00 aromatisches Lösungsmittelgemisch (Solventnaphtha®, Shellsol A/® Solvesso 100®, Siedebereich 160-180 °C)
0,50 Montmorillonit
2,50 Kieselsäure

0,60 elektroneutrales Netzmittel

0,10 Eisenoxid schwarz

1,00 Eisenoxid gelb

13,00 Titandioxid

6,50 Zinkphosphat

4,50 Magnesiumsilikat

14,00 Aluminiumsilikat

15,00 Bariumsulfat

2,50 Nitrocellulose (Komponente B, Collodiumwolle® 20 %ig, gelöst in n-Butanol/Butylacetat = 11/69)

7,30 Butylacetat 98/100

Herstellungsverfahren

In einem mit Butylacetat gereinigten trockenen Behälter wurde die Komponente A, das Lösungsmittel und das Netzmittel vorgelegt und verrührt. Montmorillonit und Siliziumdioxid wurden unter Rühren zugesetzt und bei 35-40°C mit einer üblichen Dispergiervorrichtung dispergiert. Anschließend wurde die übrige Komponente mit Ausnahme der Komponente B unter Rühren eingestreut, worauf bei 40-50°C dispergiert wurde. Nach Zusatz der Nitrocelluloselösung wurde zwölf Stunden quellen gelassen, worauf bei 55-60°C auf eine Kornfeinheit von 25-30 $\mu$m vermahlen wurde.

Zur Trocknungsverbesserung wurden 1,5 %
Dibutylzinndilaurat und 0,4 %
Zinknaphthenat zugesetzt.

Man erhielt eine Überzugsmittel-Komponente mit einer Kornfeinheit von 25-30 $\mu$m, einem Flammpunkt von > 21°C, einem spezifischen Gewicht von 1,55 g/cm$^3$ und einem Festkörpergehalt von etwa 70 %.

Als zweite Komponente des Überzugsmittels wurde folgender Härter bereitet; die Mengenangaben beziehen sich auf das Gewicht.

20,0 Aromatengemisch mit einem Siedebereich von 160-180°C (Solvesso 100®)

8,0 Xylol

14,0 Ethylglykolacetat

12,0 Butylacetat 98/100

46,0 Polyisocyant auf der Basis von Hexamethylendiisocyanat (Desmodur N® 75 % Xylol/Ethylglykolacetat)

Die vorstehend bereitete erste Komponente des Überzugsmittels wurde auf Volumenbasis im Mischungsverhältnis 4:1 mit dem vorstehenden Härter vermischt.

Das erhaltene Produkt enthielt 155 Gew.-Teile der zuerst bereiteten Komponente und 25 Gew.-Teile des Härtermaterials.

Zur Viskositätseinstellung kann eine Verdünnung auf folgender Gewichtsbasis verwendet werden.

48,0 Ethylglykolacetat

23,0 Butylacetat 98/100

29,0 Aromaten-Xylol

Das so erhaltene Überzugsmittel wurde in einer Schichtstärke von 300 $\mu$m und 480 $\mu$m durch Spritzauftrag auf ein Eisenblech aufgebracht. Bei Härtung mit einem IR-Strahler wurden in beiden Fällen kocherfreie Überzüge erhalten.

Bei Nacharbeitung des vorstehenden Beispiels, jedoch unter Verwendung der in dem vorstehendem Vergleichsversuch hergestellten Komponente A, konnten kocherfreie Überzüge nur bei Schichtdicken bis zu 200 $\mu$m erzielt werden.

**Patentansprüche**

1. Überzugsmittel, enthaltend ein Bindemittelgemisch aus einer esterlöslichen Nitrocellulose, einem hydroxyfunktionellen Copolymerisat und einem Lackpolyisocyanat, sowie gegebenenfalls Pigmente und/oder Füllstoffe, Lösungsmittel und lackübliche Hilfsstoffe,
**dadurch gekennzeichnet,** daß das Bindemittelgemisch besteht aus
   A) mindestens 60 Gew.-% eines hydroxyfunktionellen Copolymerisats, erhältlich aus
      a) 36 - 44 Gew.-% Styrol und/oder einem Styrolderivat,
      b) 22 - 28 Gew.-% eines Hydroxyalkylesters der (Meth)acrylsäure mit 4 bis 10 C-Atomen im Hydroxyalkylrest,

c) 26 - 30 Gew.-% eines Alkylesters der (Meth)acrylsäure, dessen Homopolymerisat eine Glasübergangstemperatur von > 40 °C aufweist,

d) 2 - 6 Gew.-% Dicarbonsäureanhydrid,

B) 1 - 5 Gew.-% esterlöslicher Nitrocellulose, und

C) 25 - 35 Gew.-% zwei- und mehrwertiges Polyisocyanat,

wobei die Summe der Komponenten A), B) und C) bzw. a), b), c) und d) jeweils 100 % beträgt.

2. Überzugsmittel nach Anspruch 1, dadurch gekennzeichnet, daß die Komponente A) eine Hydroxylzahl von 60 - 90 mgKOH/g Copolymerisat aufweist.

3. Überzugsmittel nach Anspruch 1 oder 2, dadurch gekennzeichnet, daß die Komponente A) Einheiten enthält, die sich von b) Butandiol-1,4-monoacrylat und/oder Butandiol-1,4-monomethacrylat ableiten.

4. Überzugsmittel nach einem der Ansprüche 1 bis 3, dadurch gekennzeichnet, daß die Komponente A) Einheiten enthält, die sich von c) tert-Butylacrylat ableiten.

5. Überzugsmittel nach einem der Ansprüche 1 bis 3, dadurch gekennzeichnet, daß die Komponente A) Einheiten enthält, die sich von c) Methylmethacrylat ableiten.

6. Verwendung des Überzugsmittels nach einem der Ansprüche 1 bis 5 für Grundierungen und Füller.

**Claims**

1. Coating composition containing a binder mixture of an ester-soluble nitrocellulose, a hydroxy-functional copolymer and a lacquer polyisocyanate, optionally together with pigments and/or extenders, solvents and auxiliary substances customary in lacquers,
   **characterised in that** the binder mixture consists of
   A) at least 60 wt.% of a hydroxy-functional copolymer obtainable from
   a) 36 - 44 wt.% styrene and/or a styrene derivative,
   b) 22 - 28 wt.% of a hydroxyalkyl ester of (meth)acrylic acid with 4 to 10 C atoms in the hydroxyalkyl residue,
   c) 26 - 30 wt.% of an alkyl ester of (meth)acrylic acid, the homopolymer of which has a glass transition temperature of > 40 °C,
   d) 2 - 6 wt.% of dicarboxylic acid anhydride,
   B) 1 - 5 wt.% of ester-soluble nitrocellulose and
   C) 25 - 35 wt.% of di- and polyfunctional polyisocyanate,
   wherein the sum of components A), B) and C) or of a), b), c) and d) is 100% in each case.

2. Coating composition according to claim 1, characterised in that component A) has a hydroxyl value of 60 - 90 mgKOH/g of copolymer.

3. Coating composition according to claim 1 or 2, characterised in that component A) contains units which are derived from b) 1,4-butanediol monoacrylate and/or 1,4-butanediol monomethacrylate.

4. Coating composition according to one of claims 1 to 3, characterised in that component A) contains units which are derived from c) *tert*-butyl acrylate.

5. Coating composition according to one of claims 1 to 3, characterised in that component A) contains units which are derived from c) methyl methacrylate.

6. Use of the coating composition according to one of claims 1 to 5 for primers and fillers.

**Revendications**

1. Revêtement contenant un mélange de liants fait d'une première nitrocellulose soluble dans les esters, d'un copolymère hydroxyfonctionnel et d'un vernis polyisocyanate, ainsi qu'éventuellement des pigments et/ou des charges, des solvants et des additifs habituels pour les vernis,
   caractérisé en ce que le mélange de liant se compose de :

A) au moins 60% en poids d'un copolymère à fonction hydroxy, que l'on peut obtenir à partir de
    a) 36-44% en poids de styrène et/ou d'un dérivé de styrène
    b) 22-28% en poids d'un hydroxyalcoylester de l'acide (méth)acrylique en $C_{4-10}$ pour le radical hydroxyalcoyle,
    c) 26-30% en poids d'un alcoylester de l'acide (méth)acrylique dont l'homopolymère présente une température de transition vitreuse supérieure à 40°C,
    d) 2-6% en poids d'anhydride de l'acide dicarboxylique ,
B) 1 à 5% en poids de nitrocellulose soluble dans les esters, et
C) 25-35% en poids de polyisocyanate bi- et polyvalent.

La somme des composants A), B) et C) ou a), b), c) et d) s'élevant à chaque fois à 100%.

2. Revêtement selon la revendication 1, caractérisé en ce que le composant A) présente un indice d'hydroxyle de 6 à 90 mg de KOH/g de copolymère.

3. Revêtement selon la revendication 1 ou 2, caractérisé en ce que le composant A) contient des unités qui dérivent de b) 1,4-monoacrylate de butanediol et/ou 1,4-monométhacrylate de butanediol.

4. Revêtement selon l'une des revendications 1 à 3, caractérisé en ce que le composant A) contient des unités qui dérivent de c) acrylate de tert.-butyle.

5. Revêtement selon l'une des revendications 1 à 3, caractérisé en ce que le composant A) contient des unités qui dérivent de c) méthacrylate de méthyle.

6. Application de revêtement selon l'une des revendications 1 à 5, comme mordant et mastic.